# EUROPÄISCHE PATENTANMELDUNG

(11) **EP 4 723 142 A1**
(43) Veröffentlichungstag der Anmeldung: **08.04.2026**
(21) Anmeldenummer: 24203947.7
(22) Anmeldetag: 01.10.2024
(51) Int. Cl.: H01B 7/42, H01B 9/00

(54) **GEKÜHLTE LEITUNG**

(71) Anmelder: LEONI Kabel GmbH, 91154 Roth (DE)
(72) Erfinder: Goß, Sebastian, 91154 Roth (DE); Niederwieser, Joachim, 91154 Roth (DE); Rossmann, Christian, 91183 Abenberg (DE)
(74) Vertreter: Frenkel, Matthias Alexander

(57) **Zusammenfassung**

Die Erfindung betrifft eine Leitung, insbesondere eine Hochvolt-Leitung oder eine Leitung für ein Ladekabel. Ferner betrifft die Erfindung ein Ladekabel für Elektrofahrzeuge mit solchen Leitungen. Ein Ausführungsbeispiel der Leitung (10) weist auf: einen Kühlschlauch (12), in dem ein Kühlmedium (14) führbar ist; und mehrere elektrische Leiter (16), wobei die mehreren elektrischen Leiter (16) in Umfangsrichtung des Kühlschlauchs (12) um den Kühlschlauch (12) herum angeordnet sind und jeweils eine Querschnittsform aufweisen, die von einer runden Form abweicht.

## Beschreibung

Die Erfindung betrifft eine Leitung, insbesondere eine Hochvolt-Leitung oder eine Leitung für ein Ladekabel. Ferner betrifft die Erfindung ein Ladekabel für Elektrofahrzeuge mit solchen Leitungen.

Bei herkömmlichen gekühlten Leitungen werden runde, insbesondere kreisrunde, elektrische Leiter um einen Kühlschlauch herum angeordnet, genauer gesagt elektrische Leiter mit einem runden, insbesondere kreisrunden Querschnitt. Die thermische Kopplung zwischen den elektrischen Leitern und dem Kühlschlauch ist dadurch nicht optimal. Zur Verbesserung der thermischen Kopplung wird manchmal eine Paste eingesetzt, welche die elektrischen Leiter besser an den Kühlschlauch anbindet. Diese Paste bringt jedoch auch Nachteile, insbesondere in der Konfektion der elektrischen Leiter, beispielsweise durch Crimpen, Schweißen etc., mit sich, da diese als Verunreinigung zu sehen ist.

Es besteht daher ein Bedarf an verbesserten gekühlten Leitungen, insbesondere an gekühlten Leitungen mit einer besseren thermischen Kopplung zwischen den elektrischen Leitern und dem Kühlschlauch.

Gemäß einem ersten Aspekt der Erfindung wird eine Leitung bereitgestellt. Die Leitung weist einen Kühlschlauch auf. In dem Kühlschlauch ist ein Kühlmedium führbar. Die Leitung weist mehrere elektrische Leiter auf. Die mehreren elektrischen Leiter sind in Umfangsrichtung des Kühlschlauchs um den Kühlschlauch herum angeordnet. Die mehreren elektrischen Leiter weisen eine Querschnittsform auf, die von einer runden, insbesondere einer kreisrunden, Form abweicht.

Durch die Anordnung der elektrischen Leiter um den Kühlschlauch herum, stehen die mehreren elektrischen Leiter derart mit dem Kühlschlauch in wärmeleitender Verbindung, dass die mehreren elektrischen Leiter von dem Kühlmedium kühlbar sind. Unter wärmeleitender Verbindung kann eine direkte/unmittelbare oder eine indirekte/mittelbare wärmeleitende Verbindung zwischen den elektrischen Leitern und Kühlschlauch verstanden werden, insbesondere eine direkte/unmittelbare oder eine indirekte/mittelbare wärmeleitende Verbindung zwischen den elektrischen Leitern und einer Außenseite/Außenoberfläche des Kühlschlauchs. Über die wärmeleitende Verbindung kann ein wärmeleitender Austausch zwischen dem Kühlschlauch (genauer gesagt dem in dem Kühlschlauch führbaren Kühlmedium) und den mehreren elektrischen Leitern hergestellt werden. Die Leitung kann auch als gekühlte Leitung bezeichnet werden.

Die mehreren elektrischen Leiter können in Umfangsrichtung des Kühlschlauchs um den Kühlschlauch herum angeordnet sein. Durch die Anordnung der elektrischen Leiter um den Kühlschlauch werden die elektrischen Leiter effizient gekühlt. Die Leitung kann daher mit einer hohen Leistung oder mit hohen Spannungen betrieben werden, ohne dass es zu einer starken Erwärmung kommt. Die elektrischen Leiter haben eine größere Oberfläche als ein entsprechender Einzelleiter. Dadurch ist die Kühlung der elektrischen Leiter effizient. Das Kühlmedium kann beispielsweise flüssig oder gasförmig sein. Aufgrund der nicht runden, insbesondere nicht kreisrunden, Querschnittsform der elektrischen Leiter ist zudem eine Anlagefläche der elektrischen Leiter an dem Kühlschlauch gegenüber einer runden, insbesondere kreisrunden, Querschnittsform erhöht. Die Kühleffizienz wird dadurch weiter verbessert. Die Stromtragfähigkeit der elektrischen Leiter wird dadurch noch weiter erhöht.

Die Leitung kann als eine Hochvolt-Leitung für ein Fahrzeug ausgebildet sein. Die Leitung kann beispielsweise als eine Hochvolt-Leitung in einem Bordnetz eines Fahrzeugs vorgesehen oder eingesetzt sein/werden. Die Leitung kann als eine Leitung für ein Ladekabel ausgebildet sein. Das Ladekabel kann als ein Ladekabel für Elektrofahrzeuge ausgebildet sein.

Die mehreren elektrischen Leiter können mehrere, nicht voneinander isolierte elektrische Leiter aufweisen oder als mehrere, nicht voneinander isolierte elektrische Leiter ausgebildet sein. Die mehreren, nicht voneinander isolierten elektrischen Leiter können kurz auch als mehrere, nicht isolierte elektrische Leiter bezeichnet werden.

Unter "nicht isoliert" kann in Bezug auf die mehreren, nicht voneinander isolierten elektrischen Leiter verstanden werden, dass diese nicht elektrisch isoliert sind. Beispielsweise ist um die elektrischen Leiter jeweils keine Isolation angeordnet. Aufgrund der wärmeleitenden Verbindung kann durch die elektrischen Leiter entstehende Wärme über das in dem Kühlschlauch führbare oder geführte Kühlmedium abgeführt werden, d.h. die elektrischen Leiter können über die wärmeleitende Verbindung mittels des in dem Kühlschlauch führbaren oder geführten Kühlmediums beispielsweise direkt gekühlt werden, ohne dass eine Isolation um die elektrischen Leiter die Wärmeübertragung und/oder Wärmeableitung verschlechtert.

Die mehreren elektrischen Leiter können in direktem Kontakt mit dem Kühlschlauch stehen. Auf diese Weise kann wärmeleitende Verbindung verbessert werden. Beispielsweise können die elektrischen Leiter direkt/unmittelbar mit der Außenseite/Außenoberfläche des Kühlschlauchs in Kontakt stehen. Dies führt zu einer besonders effizienten Kühlung der elektrischen Leiter. Die mehreren elektrischen Leiter können in indirektem Kontakt mit dem Kühlmedium stehen. Beispielsweise können die mehreren elektrischen Leiter von dem Kühlmedium durch den Kühlschlauch getrennt sein.

Der indirekte Kontakt zwischen den elektrischen Leitern und dem Kühlmedium führt dazu, dass die elektrischen Leiter, z.B. das Kupfer eines solchen Leiters, nicht direkt von der Kühlflüssigkeit umgeben werden. Auf diese Weise werden Probleme oder Risiken aufgrund eines direkten Kontakt zwischen Kühlmedium und elektrischen Leitern vermieden. Ferner muss das Kühlmedium nicht zwangsläufig isolierend sein und es muss nicht zwangsläufig darauf geachtet werden, dass keine leitende Partikel beispielsweise durch Wärmetauscher etc. in den Kühlkreislauf gelangen. Ferner kann das Kühlmedium auf seine Umweltverträglichkeit hin optimiert werden.

Die mehreren elektrischen Leiter können miteinander verseilt, verflochten oder unverseilt um den Kühlschlauch herum angeordnet sein. Bei einer verflochtenen oder verseilten Anordnung um den Kühlschlauch können die elektrischen Leiter noch effizienter gekühlt werden. Bei einer unverseilten Anordnung der elektrischen Leiter um den Kühlschlauch kann der Aufbau besonders einfach gestaltet werden.

Die mehreren elektrischen Leiter können jeweils einen Litzenleiter (oder kurz Litze), beispielsweise eine flexible Litze, aufweisen oder als Litzenleiter, beispielsweise eine flexible Litze, ausgebildet sein. Die Litze kann mehrere Einzelleiter oder Einzeldrähte aufweisen oder aus mehreren Einzelleitern oder Einzeldrähten bestehen. Die mehreren elektrischen Leiter können jeweils einen Massivleiter aufweisen oder als ein Massivleiter ausgebildet sein.

Der jeweilige Litzenleiter der mehreren elektrischen Leiter kann jeweils eine Vielzahl von Einzeldrähten aufweisen oder durch eine Vielzahl von Einzeldrähten gebildet sein. Die Einzeldrähte können unregelmäßig oder ungleichmäßig relativ zueinander angeordnet sein. Zumindest abschnittsweise kann eine Verseilung der Einzeldrähte oder Drahtbündel in dem jeweiligen Litzenleiter vorliegen.

Die elektrischen Leiter können beispielsweise semikonzentrisch oder als eine Würgelitze oder als ein unverseiltes Bündel ausgebildet sein. Im Vergleich dazu können (kreis)runde elektrische Leiter als konzentrische Litzen ausgebildet sein oder konzentrische Litzen aufweisen.

Die Einzeldrähte können miteinander verwürgt sein. Der jeweilige Litzenleiter der mehreren elektrischen Leiter kann jeweils eine Würgelitze aufweisen oder als eine Würgelitze ausgebildet sein. Eine Würgelitze kann auch als Bündellitze bezeichnet werden. Bei einer Würgelitze/Bündellitze gibt es beispielsweise keine feste Ordnung der Einzeldrähte oder Drahtbündel innerhalb der Litze. Beispielsweise kann die Lage der Drähte zueinander ständig über die Gesamtlauflänge der Litze wechseln.

Gemäß einem Beispiel kann die Lage der Einzeldrähte in dem Litzenleiter, beispielsweise in der Würgelitze, über die Länge zunächst zumindest nahezu gleich sein, da diese verdrillt werden und beispielsweise vor einem Würgepunkt definiert einlaufen. Werden die Litzenleiter jedoch um den Kühlschlauch verseilt, kann ein beispielsweise nicht runder oder konzentrischer Aufbau der Litzenleiter dazu führen, dass durch eine Anpresskraft beim Verseilprozess der Litzenleiter um den Kühlschlauch die Leiter in eine kuchenstückähnliche Form gedrückt werden und sich dann die Lage der Einzeldrähte zueinander neu orientiert. Somit können einer oder mehrere der Einzeldrähte zumindest abschnittsweise in den Kühlschlauch eindrücken.

Beispielsweise kann durch entsprechende Einstellung oder Anpassung einer Verseilungskraft bei dem Verseilprozess ein, beispielsweise leichtes oder minimales, Eindrücken der Einzeldrähte in den Kühlschlauch gezielt angepasst oder bewirkt oder bezweckt werden. Durch das leichte Eindrücken erhöht sich entsprechend die Auflagefläche von Einzeldraht/Einzeldrähten und Kühlschlauch, wodurch wiederum eine besser Wärmeübertragung ermöglicht wird.

Beispielsweise können die Einzeldrähte einer Würgelitze zunächst zumindest nahezu parallel verlaufen. Durch Verseilung der mehreren Würgelitzen um den Kühlschlauch kann eine leichte Verseilung in den Würgelitzen selbst entstehen, die sich in einer geringen Schlaglänge niederschlägt. Werden die beispielsweise als Würgelitzen ausgebildeten Litzenleiter um den zentral verlaufenden Kühlschlauch verseilt, können sich diese leicht öffnen und eine von einer (kreis)runden Querschnittsform abweichende Querschnittsform bilden.

Die Querschnittsform zumindest eines der mehreren elektrischen Leiter kann jeweils zumindest nahezu trapezförmig sein. Insbesondere kann die Querschnittsform zumindest eines der mehreren elektrischen Leiter zumindest nahezu einer Form eines gleichschenkligen Trapezes entsprechen. Die Querschnittsform kann auch als kuchenstückähnlich bezeichnet werden, wobei die Spitze des Kuchenstücks beispielsweise abgeschnitten sein kann. Ein Gesamtverbund der elektrischen Leiter mit dem Kühlschlauch kann somit einen kuchenähnlichen Verbund ausbilden. Durch die zumindest nahezu trapezförmige Querschnittsform kann ein größerer Abschnitt der elektrischen Leiter an dem Kühlschlauch anliegen oder mit dem Kühlschlauch in beispielsweise direkter wärmeleitender Verbindung stehen als bei elektrischen Leitern mit einer runden, beispielsweise kreisrunden, Querschnittsform. Anders ausgedrückt, eine Anlagefläche der elektrischen Leiter an dem Kühlschlauch wird gegenüber einer (kreis)runden Ausgestaltung der Leiter erhöht. Auf diese Weise wird der Wärmeaustausch zwischen elektrischen Leitern und dem Kühlmedium optimiert, wodurch die Effizienz der Kühlung verbessert. Durch Verbesserung der Kühleffizienz können höhere Ströme durch die Leitung geleitet werden. Anders ausgedrückt, die Stromtragfähigkeit der Leitung kann erhöht werden.

In dem Verbund mit dem Kühlschlauch können die elektrischen Leiter auch als Leiterpakete oder Leitereinheiten bezeichnet werden.

Die mehreren elektrischen Leiter können jeweils eine zu dem Kühlschlauch hinweisende Innenfläche aufweisen. Die Innenfläche zumindest eines der mehreren elektrischen Leiter kann zumindest abschnittsweise, beispielsweise vollständig, im Querschnitt zumindest nahezu eben ausgebildet sein. Beispielsweise kann die jeweilige Innenfläche der mehreren elektrischen Leiter zumindest abschnittsweise, beispielsweise vollständig, im Querschnitt zumindest nahezu eben ausgebildet sein. Alternativ kann die die Innenfläche zumindest eines der mehreren elektrischen Leiter zumindest abschnittsweise, beispielsweise vollständig, im Querschnitt zumindest nahezu konkav ausgebildet sein. Beispielsweise kann die jeweilige Innenfläche der mehreren elektrischen Leiter zumindest abschnittsweise, beispielsweise vollständig, im Querschnitt zumindest nahezu konkav ausgebildet sein. Gemäß einem Beispiel kann die Innenfläche zumindest eines der mehreren elektrischen Leiter im Querschnitt zumindest nahezu konkav ausgebildet sein und kann die Innenfläche zumindest eines der mehreren elektrischen Leiter im Querschnitt zumindest nahezu eben ausgebildet sein. Alternativ kann die Innenfläche jedes der mehreren elektrischen Leiter im Querschnitt zumindest nahezu konkav ausgebildet sein. Gemäß einem Beispiel kann ein Abschnitt der Innenfläche zumindest eines der mehreren elektrischen Leiter im Querschnitt zumindest nahezu konkav ausgebildet sein und kann ein anderer Abschnitt der Innenfläche des zumindest einen der mehreren elektrischen Leiter im Querschnitt zumindest nahezu eben ausgebildet sein. Folglich ist eine Kombination aus zumindest einem Abschnitt und zumindest einem konkaven Abschnitt an der Innenfläche der mehreren elektrischen Leiter möglich. Konkav ist hierin , im Einklang mit dem üblichen Verständnis, als nach innen gewölbt zu verstehen.

Durch die im Querschnitt zumindest nahezu ebene und/oder konkave Ausbildung kann ein größerer Abschnitt der elektrischen Leiter an dem Kühlschlauch anliegen oder mit dem Kühlschlauch in beispielsweise direkter wärmeleitender Verbindung stehen als bei (kreis)runden elektrischen Leitern mit einer konvexen Innenfläche. Anders ausgedrückt, eine Anlagefläche der elektrischen Leiter an dem Kühlschlauch wird gegenüber einer (kreis)runden Ausgestaltung der Leiter erhöht. Beispielsweise können sich - durch die im Querschnitt ebene und/oder konkave Innenfläche - die elektrischen Leiter homogener an den Kühlschlauch anlegen als (kreis)runde elektrische Leiter. Insbesondere wird durch die im Querschnitt ebene und/oder konkave Ausbildung der Innenfläche eine bessere thermische Anbindung der elektrischen Leiter an den Kühlschlauch ermöglicht. Auf diese Weise wird die Effizienz der Kühlung verbessert. Durch Verbesserung der Kühleffizienz können höhere Ströme durch die Leitung geleitet werden. Anders ausgedrückt, die Stromtragfähigkeit der Leitung kann erhöht werden. Bei einer im Querschnitt zumindest nahezu konkaven Ausgestaltung der Innenfläche können die elektrischen Leiter besonders homogen an dem Kühlschlauch anliegen. Die Kühleffizienz wird daher gegenüber einer im Querschnitt zumindest nahezu ebenen Ausgestaltung der Innenfläche noch weiter erhöht.

Beispielsweise kann eine Leitung gemäß dem ersten Aspekt (mit nicht (kreis)runden, insbesondere zumindest nahezu trapezförmigen, elektrischen Leitern) mit einem Leitungs-Querschnitt von 50mm² die annähernd gleiche Stromtragfähigkeit haben wie eine Leitung mit (kreis)runden Leitern oder Litzen mit einem Leitungs-Querschnitt von 70mm².

Die mehreren elektrischen Leiter können jeweils eine von dem Kühlschlauch wegweisende Außenfläche aufweisen. Die Außenfläche zumindest eines der mehreren elektrischen Leiter kann zumindest abschnittsweise im Querschnitt zumindest nahezu eben ausgebildet sein. Die Außenfläche zumindest eines der mehreren elektrischen Leiter kann im Querschnitt zumindest nahezu konvex ausgebildet sein. Konvex ist hierin, im Einklang mit dem üblichen Verständnis, als nach außen gewölbt zu verstehen.

Bei dem Kühlschlauch kann es sich allgemein um einen sich in Längsrichtung des Ladekabels erstreckenden Körper handeln. Der Körper kann einen Hohlraum aufweisen, in dem ein Kühlmedium (kann auch als Kühlmittel bezeichnet werden) zirkulieren kann. Der Kühlschlauch ist nicht auf einen bestimmten Querschnitt beschränkt. Der Kühlschlauch kann beispielsweise einen runden, eckigen oder ovalen Querschnitt haben. Der Kühlschlauch kann die Form eines Hohlzylinders annehmen, ist jedoch nicht auf eine solche Form beschränkt. Der Kühlschlauch erstreckt sich beispielsweise entlang der vollen Länge der Leitung. Der Kühlschlauch kann flexibel ausgebildet sein, d.h. insbesondere nicht starr. Der Kühlschlauch kann beispielsweise elastisch biegbar oder verformbar sein.

Der Kühlschlauch kann für das Kühlmedium zumindest nahezu dicht oder undurchdringbar ausgebildet sein. Der Kühlschlauch kann hierfür beispielsweise in Längsrichtung und Umfangsrichtung vollständig geschlossen sein. Beispielsweise kann der Kühlschlauch eine Ummantelung aufweisen, so dass der Kühlschlauch in seinem Inneren einen Hohlraum zur Aufnahme des Kühlmediums bildet. Die Ummantelung kann für das Kühlmedium zumindest nahezu dicht oder undurchdringbar ausgebildet sein. Auf diese Weise kann das Kühlmedium in dem Hohlraum zirkulieren, die Ummantelung jedoch zumindest nahezu nicht durchdringen. Bei der Leitung kommen dadurch die um den Kühlschlauch, beispielsweise die Ummantelung des Kühlschlauchs, angeordneten elektrischen Leiter nicht mit dem Kühlmedium in Kontakt, wenn sich der Kühlschlauch, insbesondere die Ummantelung des Kühlschlauchs, in einem unbeschädigten Zustand befindet. Es kann daher prinzipiell jedes Kühlmedium eingesetzt werden. Bei einem unbeschädigten Kühlschlauch kommt es bei der Leitung daher zu keinem Kontakt zwischen Kühlmedium und elektrischen Leitern und daher zu keinen Problemen bei Kontakt zwischen Kühlmedium und den elektrischen Leitern. Anders ausgedrückt, bei der Leitung kann die Ummantelung des Kühlschlauchs das Kühlmedium umgeben. Die elektrischen Leiter können sich außerhalb der Ummantelung, beispielsweise an der Außenseite/Außenoberfläche der Ummantelung, befinden.

Die mehreren elektrischen Leiter können als Kupferleiter oder als Aluminiumleiter ausgebildet sein. Insbesondere können die Einzeldrähte der elektrischen Leiter jeweils als Kupferdrähte oder als Aluminiumdrähte oder als lackisolierte Kupferdrähte oder als lackisolierte Aluminiumdrähte ausgebildet sein. Somit können beispielsweise die Kupferdrähte selbst lackisoliert sein, die durch die lackisolierten Kupferdrähte gebildeten elektrischen Leiter selbst beispielsweise jedoch keine eigene Isolation aufweisen. Aufgrund der hohen elektrischen Leitfähigkeit von Kupfer kann die Leistung hohe Ströme leiten.

Die Leitung kann ferner eine Isolation aufweisen. Die Isolation kann den Kühlschlauch und die mehreren elektrischen Leiter umgeben. Beispielsweise kann die Isolation die mehreren elektrischen Leiter umgeben sowie den Kühlschlauch, um den die mehreren elektrischen Leiter angeordnet sind. Die Isolation kann die mehreren elektrischen Leiter unmittelbar umgeben. Die Isolation kann mit den elektrischen Leitern direkt/unmittelbar in Kontakt stehen. Die Isolation kann mit dem Kühlschlauch, beispielsweise der Außenseite/der Außenoberfläche des Kühlschlauchs, direkt/unmittelbar in Kontakt stehen.

Gemäß einem zweiten Aspekt wird ein Ladekabel bereitgestellt. Das Ladekabel ist beispielsweise als Ladekabel für Elektrofahrzeuge ausgebildet. Das Ladekabel kann zumindest eine erste Leitung gemäß dem ersten Aspekt und zumindest eine zweite Leitung gemäß dem ersten Aspekt aufweisen. Demgemäß weist das Ladekabel zumindest einen ersten Kühlschlauch (d.h. jeweils einen Kühlschlauch der zumindest einen ersten Leitung gemäß dem ersten Aspekt) und zumindest einen zweiten Kühlschlauch auf (d.h. jeweils einen Kühlschlauch der zumindest einen zweiten Leitung gemäß dem ersten Aspekt).

In diesem Fall sind mehrere elektrische Leiter dementsprechend in Umfangsrichtung des ersten Kühlschlauchs um den ersten Kühlschlauch herum angeordnet. Mehrere elektrische Leiter sind entsprechend in Umfangsrichtung des zweiten Kühlschlauchs um den zweiten Kühlschlauch herum angeordnet.

Der Kühlschlauch der zumindest einen ersten Leitung kann als ein Vorlauf für das Kühlmedium ausgebildet sein. Der Kühlschlauch der zumindest einen zweiten Leitung kann als ein Rücklauf für das Kühlmedium ausgebildet sein. Dadurch kann das Kühlmedium vollständig in dem Ladekabel zirkulieren. Der Vorlauf kann auch als Hinleitung bezeichnet werden. Der Rücklauf kann auch als Rückleitung bezeichnet werden. Beispielsweise kann der Vorlauf eine Hinleitung zu einer Steckerkühlung darstellen und kann der Rücklauf eine Rückleitung für Kühlfluid aus der Steckerkühlung darstellen. Unter der Hinleitung kann ein Kanal oder Schlauch verstanden werden, der von einem Ort mit hohem Fluiddruck wegführt. Unter der Rückleitung kann ein Kanal oder ein Schlauch verstanden werden, der zu einem Ort mit tiefem Fluiddruck hinführt. Durch den Vorlauf kann das Kühlfluid hin und durch den Rücklauf zurück transportiert werden.

Alternativ kann der Kühlschlauch der zumindest einen ersten Leitung als ein Rücklauf und der Kühlschlauch der zumindest einen zweiten Leitung kann als ein Vorlauf für das Kühlmedium ausgebildet sein.

Alternativ kann das Kühlfluid durch beide Leitungen hin oder zurück transportiert werden und z. B. durch weitere Schläuche zurück bzw. hin transportiert werden. Ferner kann das Kühlmedium z.B. als ein Kühlfluid durch die Leitungen gepumpt werden und am Ende austreten.

Beispielsweise können beispielsweise der Kühlschlauch der zumindest einen ersten Leitung und der Kühlschlauch der zumindest einen zweiten Leitung als ein Vorlauf für das Kühlmedium ausgebildet sein. In diesem Fall kann beispielsweise ein zusätzlicher Rücklauf für das Kühlmedium in dem Ladekabel angeordnet sein. Alternativ können beispielsweise der Kühlschlauch der zumindest einen ersten Leitung und der Kühlschlauch der zumindest einen zweiten Leitung als ein Rücklauf für das Kühlmedium ausgebildet sein. In diesem Fall kann beispielsweise ein zusätzlicher Vorlauf für das Kühlmedium in dem Ladekabel angeordnet sein.

Die mehreren elektrischen Leiter können eine Gleichstromader bilden. Die Gleichstromader dient zur Übertragung von Gleichstrom in dem Ladekabel. Beispielsweise kann die Gleichstromader eine der zur Übertragung von Gleichstrom nötigen (zwei) Gleichstromadern eines Ladekabels sein. Die mehreren elektrischen Leiter der zumindest einen ersten Leitung können eine gemeinsame positive Gleichstromader bilden. Anders ausgedrückt, die mehreren elektrischen Leiter um den ersten Kühlschlauch können eine positive Gleichstromader bilden. Die mehreren elektrischen Leiter der zumindest einen zweiten Leitung können eine gemeinsame negative Gleichstromader bilden. Anders ausgedrückt, die mehreren elektrischen Leiter um den zweiten Kühlschlauch können eine negative Gleichstromader bilden. Somit kann ein effizientes Gleichstromladen von Elektrofahrzeugen mittels des Ladekabels erfolgen.

Beispielsweise können mit dem Ladekabel Ströme von hundert Ampere (A), oder mehreren hundert Ampere, beispielsweise von bis zu ca. 1500 A oder sogar bis zu 3000 A (beispielsweise bei zwei Adern pro Richtung), übertragen werden, ohne dass es - bei intakter Kühlung - zu einer nennenswerten Erwärmung der Leitungen und/oder des Ladekabels kommt. Das heißt, trotz relativ kleiner/geringer Querschnitte der Leitungen kann eine hohe Leistung von der Ladestation ins Fahrzeug (und damit an die Batterie) übertragen werden.

Das Ladekabel kann einen Außenmantel aufweisen. Der Außenmantel schützt das Ladekabel und kann daher auch als Schutzmantel bezeichnet werden. Der gemeinsame Außenmantel hält die Leitungen zusammen und schützt sie beispielsweise vor Abrieb und Umwelteinflüssen. Der Außenmantel kann außerdem wärmeisolierend sein. Die Wärmeisolierung ist insbesondere dann von Vorteil, wenn das Kühlmedium als Kühlfluid ausgebildet ist. Die Wärmeisolierung verhindert beispielsweise ein Einfrieren des Kühlfluids.

Das Ladekabel kann einen oder mehrere Leiter oder eine oder mehrere Adern für das Laden mit Wechselstrom (kurz Wechselstromleiter) aufweisen. Mittels des einen oder der mehreren Leiter für Wechselstrom kann das Ladekabel zum Wechselstromladen eines Elektrofahrzeugs verwendet werden. Beispielsweise kann das Ladekabel ein Kombinationskabel sein, mit dem sowohl Gleichstrom- als auch Wechselstromladen ermöglicht wird. Rein beispielhaft seien hier eine mögliche Ausgestaltung mit drei Leitern/Adern (Leiter, Null-Leiter, Erdung), fünf Leitern/Adern (drei Leiter, Nullleiter, Erdung) oder sieben Leitern/Adern (drei Leiter, Nullleiter, Erdung sowie zwei Leiter für die Kommunikation zwischen einer Energiequelle, z.B. einer Ladestation, und einer Energiesenke, z.B. einer Batterie eines Elektrofahrzeugs oder einem Elektrofahrzeug) genannt. Zusätzlich oder alternativ kann das Ladekabel Datenleitungen aufweisen. Die Datenleitungen können ausgebildet sein zur Datenübertragung zwischen einer Energiequelle/Stromquelle, z.B. einer Ladestation, und einer Energiesenke/Stromsenke, z.B. einer Fahrzeugbatterie / einem Fahrzeug. Über die Datenleitungen können die Energiequelle/Stromquelle und die Energiesenke/Stromsenke miteinander kommunizieren.

Das Ladekabel kann mit der Auswerteeinheit ein gemeinsames Ladesystem gemäß einem dritten Aspekt der Erfindung bilden. Anders ausgedrückt, kann ein Ladesystem gemäß einem dritten Aspekt der Erfindung das Ladekabel und die Auswerteeinheit aufweisen. Alternativ oder zusätzlich zu der Auswerteeinheit kann das Ladesystem das Ladekabel, einen Endanschluss und einen Stecker aufweisen. Der Endanschluss kann eine Zuführung für das Kühlmedium aufweisen, welche das Kühlmedium zumindest in eine der Leitungen einführen kann, genauer gesagt in den Kühlschlauch zumindest einer der Leitungen, und aus einer anderen der Leitungen, genauer gesagt dem Kühlschlauch einer anderen der Leitungen, aufnehmen kann. Der Stecker ist ausgebildet, mit dem Fahrzeug verbunden zu werden. Der Stecker kann neben den elektrischen Kontakten zur elektrischen Verbindung der vorhandenen elektrischen Leiter mit Leitungen des Fahrzeugs eine Fluidrückführung aufweisen, welche das Kühlmedium aus dem Kühlschlauch einer Leitung aufnehmen und zu dem Kühlschlauch der anderen Leitung führen kann.

Ferner kann gemäß einem vierten Aspekt eine Ladestation mit dem Ladekabel gemäß dem zweiten Aspekt oder mit einem Ladesystem gemäß dem dritten Aspekt bereitgestellt werden.

Ferner kann gemäß einem fünften Aspekt ein Bordnetz für ein Fahrzeug mit mehreren Leitungen gemäß dem ersten Aspekt bereitgestellt werden. Die Leitungen können insbesondere als Hochvolt-Leitungen ausgebildet sein, z. B. als einadrige Hochvolt-Leitungen. Die Hochvolt-Leitungen können als geschirmte oder als ungeschirmte Leitungen ausgebildet sein. Auch ein Kombination von geschirmten und ungeschirmten Leitungen ist denkbar.

Auch wenn einige der voranstehend beschriebenen Aspekte in Bezug auf die Leitung gemäß dem ersten Aspekt beschrieben wurden, so können diese Aspekte auch in entsprechender Weise in dem Ladekabel gemäß dem zweiten Aspekt, dem Ladesystem gemäß dem dritten Aspekt, der Ladestation gemäß dem vierten Aspekt und/oder dem Bordnetz gemäß dem fünften Aspekt realisiert sein/werden und umgekehrt.

Die vorliegende Erfindung soll weiter anhand von Figuren erläutert werden. Diese Figuren zeigen schematisch:
- Figur 1: eine Darstellung eines Querschnitts einer gekühlten Leitung;
- Figur 2: eine Darstellung eines Querschnitts eines Ausführungsbeispiels einer gekühlten Leitung; und
- Figur 3: eine Darstellung eines Querschnitts eines Ausführungsbeispiels eines Ladekabels mit zwei Leitungen gemäß Figur 2.

Im Folgenden werden, ohne hierauf beschränkt zu sein, spezifische Details dargelegt, um ein vollständiges Verständnis der vorliegenden Erfindung zu liefern. Es ist einem Fachmann jedoch klar, dass die vorliegende Erfindung in anderen

Ausführungsbeispielen verwendet werden kann, die von den nachfolgend dargelegten Details abweichen können. Die Figuren dienen ferner lediglich zum Zwecke der Verdeutlichung von Ausführungsbeispielen. Sie sind nicht maßstabsgetreu und sollen lediglich das allgemeine Konzept der Erfindung beispielhaft widerspiegeln. Beispielsweise sollen Merkmale, die in den Figuren enthalten sind, keineswegs als notwendiger Bestandteil erachtet werden.

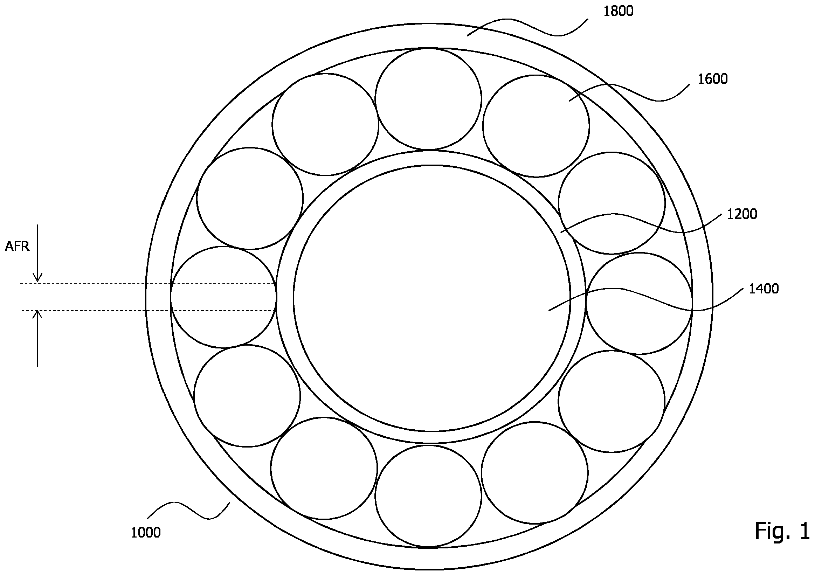

Figur 1 zeigt einen Querschnitt einer Leitung 1000. Die Leitung 1000 weist einen Kühlschlauch 1200 und mehrere, nicht voneinander isolierte elektrische Leiter 1600 auf. In dem Kühlschlauch 1200 ist ein Kühlmedium 1400 führbar. Genauer gesagt weist der Kühlschlauch 1200 aus Figur 1 beispielhaft eine Ummantelung, einen Außenmantel oder eine Außenhülle und einen zumindest weitestgehend hohlen Innenraum auf. In dem Innenraum ist das Kühlmedium 1400 führbar. Der Außenmantel kann auch als Isolierhülle bezeichnet werden und wird im Folgenden auch hauptsächlich als solche bezeichnet werden.

Die mehreren elektrischen Leiter 1600 sind in Umfangsrichtung des Kühlschlauchs 1200 um den Kühlschlauch 1200 herum angeordnet. In dem Beispiel aus Figur 1 sind die elektrischen Leiter 1600 jeweils in direktem Kontakt mit der Außenseite (der äußeren Oberfläche) des Kühlschlauchs, beispielsweise der Außenseite der Isolierhülle des Kühlschlauchs 1200. Die mehreren elektrischen Leiter 1600 haben in ihrem Querschnitt jeweils eine kreisrunde Form. Alternativ sind andere runde Querschnittsformen denkbar.

Die elektrischen Leiter 1600 können jeweils Einzeldrähte oder Litzenleiter oder Geflechte aufweisen oder aus diesen gebildet sein. Die runde, insbesondere kreisrunde, Form kann beispielsweise durch eine konzentrisch aufgebaute Litze erreicht werden. Bei konzentrisch aufgebauten Litzen hat jeder Einzeldraht eine definierte Lage in der Litze. Eine oder mehrere Drahtlagen werden konzentrisch über einen Zentraldraht angeordnet. Bei konzentrisch aufgebauten Litzen nehmen die Einzeldrähte eine genau definierte Lage um den inneren Kerndraht ein. Dadurch wird ein absolut regelmäßiger Aufbau erreicht.

Die elektrischen Leiter 1600 liegen jeweils mit einem Anlageabschnitt AFR an dem Kühlschlauch 1200 an.

Der Kühlschlauch 1200 ist zumindest nahezu dicht für das Kühlmedium 1400. Das heißt, das Kühlmedium kann in einem normalen, unbeschädigten Zustand des Kühlschlauchs 1200 normalerweise nicht aus dem Inneren (dem Innenraum) des Kühlschlauchs 1200 nach außen dringen. Die Isolierhülle des Kühlschlauchs 1200 ist in einem unbeschädigten Zustand für das Kühlmedium zumindest nahezu dicht / undurchdringbar. Die elektrischen Leiter 1600 kommen bei einem unbeschädigten Kühlschlauch 1200 daher nicht mit dem Kühlmedium 1400 in Kontakt. Die elektrischen Leiter 1600, genauer gesagt die Gesamtheit der elektrischen Leiter 1600 (nicht jeder der Leiter selbst), sowie der Kühlschlauch 1200 sind von einer Isolation 1800 umgeben. Die Isolation 1800 dient u.a. der elektrischen Isolierung der elektrischen Leiter 1600.

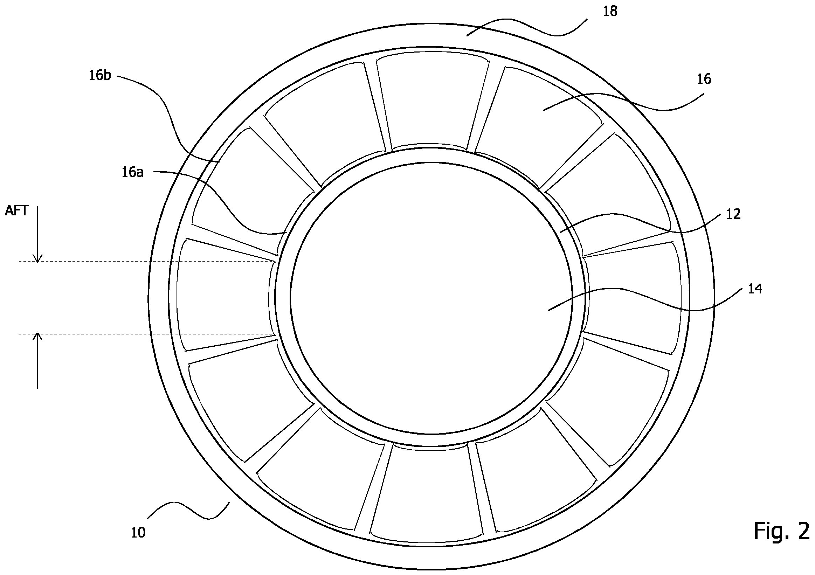

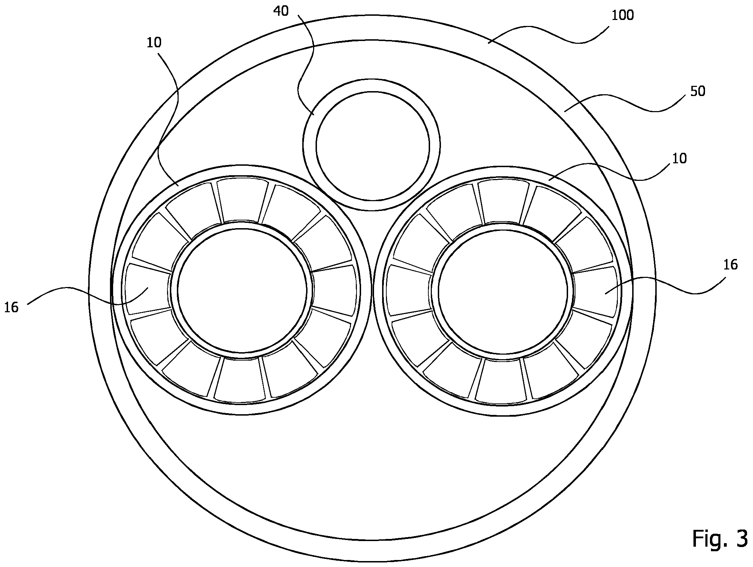

Figur 2 zeigt einen Querschnitt eines Ausführungsbeispiels einer Leitung 10 gemäß einem Ausführungsbeispiel. In einem Beispiel kann die Leitung 10 als eine beispielsweise einadrige Hochvolt-Leitung für ein Fahrzeug ausgebildet sein. In einem anderen Beispiel kann die Leitung 10 als eine Leitung für ein Ladekabel beispielsweise für Elektrofahrzeuge ausgebildet sein (siehe Figur 3).

Die Leitung 10 weist einen Kühlschlauch 12 auf. In dem Kühlschlauch ist ein Kühlmedium 14 führbar. Die Leitung 10 weist mehrere elektrische Leiter 16 auf. In dem Beispiel aus Figur 2 sind beispielhaft zwölf elektrische Leiter gezeigt. Dies ist als rein exemplarisch zu verstehen und es kann jede Vielzahl von elektrischen Leitern 16 um den Kühlschlauch 12 herum angeordnet sein, beispielsweise von inklusive drei bis inklusive dreißig elektrische Leiter 16, insbesondere sechs bis achtzehn elektrische Leiter 16, oder als konkretes Beispiel fünfzehn elektrische Leiter 16. Das Kühlmedium 14 ist durch die Isolierhülle des jeweiligen Kühlschlauchs 12 von den elektrischen Leitern 16 (beispielsweise dem Kupfer / den Kupferleitern 16 oder dem Aluminium / den Aluminiumleitern) getrennt. Damit kann jede Art von Kühlmedium 14 eingesetzt werden. Dies ist vorteilhaft gegenüber Lösungen, welche elektrische Leiter, wie Kupferleiter, direkt in eine Kühlflüssigkeit legen oder von dieser umgeben lassen. Hier besteht ein Risiko, wenn die Kühlflüssigkeit nicht vollständig / 100%ig isoliert. Bei den vorliegenden hohen Spannungen kann es leicht zu Ableitströmen beispielsweise durch die Kühlflüssigkeit kommen und somit zu Verlusten in der Energieübertragung.

Der Kühlschlauch 12 ist für das Kühlmedium 14 zumindest nahezu undurchdringbar ausgebildet. Die Leitung 10 weist ferner eine Isolation 18 auf. Die Isolation 18 umgibt den Kühlschlauch 12 und die elektrischen Leiter 16.

Die mehreren elektrischen Leiter 16 sind in Umfangsrichtung des Kühlschlauchs 12 um den Kühlschlauch 12 herum angeordnet. Die mehreren elektrischen Leiter 16 weisen jeweils eine Querschnittsform auf, die von einer (kreis)runden Form abweicht, wie sie beispielhaft in Figur 1 dargestellt ist. Die mehreren elektrischen Leiter 16 sind beispielhaft als mehrere, nicht voneinander isolierte elektrische Leiter 16 ausgebildet.

Die mehreren elektrischen Leiter 16 stehen beispielhaft in direktem Kontakt mit dem Kühlschlauch 12. Der vermeintliche Abstand zwischen den Leitern 16 und dem Kühlschlauch 12 in Figur 2 dient nur dazu, die jeweiligen Elemente, d. h. den Kühlschlauch 12 und die elektrischen Leiter 16 zu veranschaulichen und voneinander unterscheidbar zu machen. Gleiches gilt für den vermeintlichen Abstand zwischen den elektrischen Leitern 16 und der Isolation 18.

Die mehreren elektrischen Leiter 16 sind in Figur 2 beispielhaft miteinander verseilt um den Kühlschlauch 12 herum angeordnet. Alternativ ist eine unverseilte Anordnung um den Kühlschlauch 12 herum denkbar.

Die mehreren elektrischen Leiter 16 sind jeweils als ein Litzenleiter ausgebildet. Die jeweilige Litzenleiter der mehreren elektrischen Leiter 16 sind jeweils durch eine Vielzahl von Einzeldrähten gebildet. Die Einzeldrähte können jeweils aus Kupfer oder eine Kupferlegierung gebildet sein, insbesondere durch lackisolierte Kupferdrähte. Die Einzeldrähte sind miteinander verwürgt. Die Litzenleiter können demnach jeweils als eine Würgelitze (auch als Bündellitze bezeichnet) ausgebildet sein. Die Einzeldrähte können unregelmäßig oder ungleichmäßig zueinander angeordnet in dem Litzenleiter angeordnet sein.

Werden solche als Würgelitzen ausgebildete elektrische Leiter 16 um den Kühlschlauch 12 verseilt, öffnen sich diese leicht und bilden eine von einer kreisrunden Querschnittsform abweichende Querschnittsform.

Die Querschnittsform der mehreren elektrischen Leiter 16 kann jeweils zumindest nahezu trapezförmig sein. In dem Beispiel aus Figur 2 haben die elektrischen Leiter 16 jeweils in ihrem Querschnitt die Form eines gleichschenkligen Trapezes. Auch wenn die elektrischen Leiter 16 in Figur 2 der Einfachheit halber eine identische Form haben, so kann die exakte Form der elektrischen Leiter 16 voneinander abweichen. Beispielsweise können die Trapeze unterschiedliche Größen haben und/oder es können zumindest nahezu gleichschenklige sowie nicht gleichschenklige Trapeze miteinander kombiniert werden. Die zumindest nahezu trapezförmigen elektrischen Leiter 16 können auch als Leiterpakete oder Leitereinheiten bezeichnet werden.

Die mehreren elektrischen Leiter weisen jeweils eine zu dem Kühlschlauch 12 hinweisende Innenfläche 16a auf. Die Innenfläche 16a der mehreren elektrischen Leiter 16 ist in Figur 2 im Querschnitt zumindest nahezu konkav ausgebildet. Die Innenfläche 16a der elektrischen Leiter 16 folgt somit der Form der Außenseite des Kühlschlauchs 12. Der Radius der konkaven Form der Innenfläche 16a kann somit zumindest nahezu dem Radius des Kühlschlauchs 12 entsprechen. Alternativ können die Innenflächen der mehreren elektrischen Leiter 16 im Querschnitt zumindest nahezu eben ausgebildet sein oder einen oder mehrere ebene Abschnitte aufweisen. Die mehreren elektrischen Leiter 16 weisen zudem jeweils eine von dem Kühlschlauch 12 wegweisende Außenfläche 16b auf. Die Außenfläche 16b der mehreren elektrischen Leiter ist in Figur 2 im Querschnitt zumindest nahezu konvex ausgebildet. Die Außenfläche 16b der elektrischen Leiter folgt somit zumindest nahezu der Form der Isolation 18. Der Radius der konvexen Form der Außenfläche 16b kann somit zumindest nahezu dem Radius der Isolation 18 entsprechen. Alternativ kann die Außenfläche 16b der mehreren elektrischen Leiter im Querschnitt zumindest nahezu eben ausgebildet sein.

Durch die im Querschnitt konkave Ausbildung der Innenfläche 16a der elektrischen Leiter 16 liegen die elektrischen Leiter 16 jeweils mit einer Anlagefläche AFT zumindest nahezu an dem Kühlschlauch an. Bei den elektrischen Leitern 1600 mit rundem Querschnitt aus Figur 1 liegt eine Anlagefläche AFR der elektrischen Leiter an dem Kühlschlauch an. Die Anlagefläche AFT ist (deutlich) größer als die Anlagefläche AFR, beispielsweise mindestens doppelt so groß. Somit liegt durch die konkave Ausgestaltung der Innenfläche 16a ein größerer Abschnitt der elektrischen Leiter 16 an dem Kühlschlauch 12 an oder steht mit dem Kühlschlauch 12 in beispielsweise direkter wärmeleitender Verbindung als bei elektrischen Leitern 1600 mit einer konvexen Innenfläche wie den runden elektrischen Leitern 1600. Anders ausgedrückt, eine Anlagefläche AFT der elektrischen Leiter 16 an dem Kühlschlauch 12 wird gegenüber einer (kreis)runden Ausgestaltung der Leiter 1600 (deutlich) erhöht. Beispielsweise können sich - durch die im Querschnitt konkave Innenfläche 16a - die elektrischen Leiter 16 homogener an den Kühlschlauch 12 anlegen als (kreis)runde elektrische Leiter 1600. Insbesondere wird durch die im Querschnitt konkave Ausbildung der Innenfläche 16a eine bessere thermische Anbindung der elektrischen Leiter 16 an den Kühlschlauch 12 ermöglicht. Auf diese Weise wird die Effizienz der Kühlung verbessert. Durch Verbesserung der Kühleffizienz können höhere Ströme durch die Leitung 10 geleitet werden. Anders ausgedrückt, die Stromtragfähigkeit der Leitung 10 kann erhöht werden.

Gemäß einer, in Figur 2 nicht zu erkennenden, Variante kann ein, beispielsweise leichtes oder minimales, Eindrücken der Einzeldrähte in den Kühlschlauch 12 gezielt angepasst oder bewirkt oder bezweckt werden. Anders ausgedrückt, zumindest manche oder alle der Einzeldrähte können zumindest abschnittsweise in den Kühlschlauch 12 (leicht) eindrücken. Durch das (leichte) Eindrücken erhöht sich entsprechend die Auflagefläche von Einzeldraht und Kühlschlauch 12, wodurch wiederum eine besser Wärmeübertragung ermöglicht wird. Das Eindrücken kann durch entsprechende Einstellung oder Anpassung einer Verseilungskraft bei einem Verseilprozess der elektrischen Leiter 16 um den Kühlschlauch 12 erreicht werden.

Beispielsweise kann eine Leitung 10 aus Figur 2 mit einem Querschnitt von 50mm² zumindest nahezu die gleiche Stromtragfähigkeit haben wie eine Leitung 1000 aus Figur 1 mit (kreis)runden Litzen mit einem Querschnitt von 70mm².

Im Folgenden wird in Bezug auf Figur 3 beispielhaft angenommen, dass die elektrischen Leiter 16 Kupferleiter sind. Daher wird im Folgenden in Bezug auf die Figur 3 teilweise von Kupferleitern 16 gesprochen.

In Figur 3 ist ein Querschnitt eines Ausführungsbeispiel eines Ladekabels 100 gezeigt. Das Ladekabel 100 weist eine erste Leitung 10 aus Figur 2 und eine zweite Leitung 10 aus Figur 2 auf. In Figur 3 sind beispielhaft genau eine einzige erste Leitung 10 und genau eine einzige zweite Leitung 10 gezeigt. Es können alternativ auch mehrere erste Leitungen 10 und/oder mehrere zweite Leitungen 10 vorgesehen sein. Ferner kann das Ladekabel 100 optional Wechselstromleitungen aufweisen. Auf die Wechselstromleitungen kann jedoch auch verzichtet werden. Ist keine Wechselstromleitung vorgesehen, so ist das Ladekabel 100 als Gleichstromladekabel ausgebildet. Sind hingegen die zwei Leitungen 10 sowie Wechselstromleitungen vorgesehen, so ist das Ladekabel 100 als Kombinationsladekabel für wahlweises Gleich- und Wechselstromladen ausgebildet. In dem Ladekabel 100 können ferner eine oder mehrere Signalleitungen angeordnet sein. Ferner ist in dem Ladekabel 100 ein Schutzleiter 40 angeordnet. Das Ladekabel 100 ist von einem Außenmantel 50 umgeben.

Das in Figur 3 schematisch dargestellte Ladekabel 100 kann als Ladekabel für Elektrofahrzeuge verwendet werden. Für diesen Anwendungsfall ist das Ladekabel 100 ausgebildet, eine Übertragungsleistung von beispielsweise bis zu 50 kW oder bis zu 70 kW oder bis zu 250 kW oder bis zu 500 kW oder bis zu 3,75 MW, in Sonderfällen bis zu 10 MW zu ermöglichen.

Rein beispielhaft ist der Kühlschlauch 12 der ersten Leitung 10 als ein Vorlauf und der Kühlschlauch 22 der zweiten Leitung 10 als ein Rücklauf für das Kühlmedium ausgebildet. Ferner bilden beispielhaft die mehreren elektrischen Leiter 16 der ersten Leitung 10 eine beispielhaft gemeinsame positive Gleichstromader und bilden die mehreren elektrischen Leiter 16 der zweiten Leitung 10 eine beispielhaft gemeinsame negative Gleichstromader. Dies ist als rein beispielhaft zu verstehen und die Erfindung ist nicht auf dieses Beispiel beschränkt.

Durch die spezielle Anordnung und Ausbildung der elektrischen Leiter 16, z.B. Kupferleiter, um den jeweiligen Kühlschlauch 12 wird eine bestmögliche oder maximale Wärmeableitung gewährleistet. Es ist keine zusätzliche Isolierung zwischen den elektrischen Leitern 16 (dem Kupfer / den Kupferleitern 16) und dem direkten Kontakt zum jeweiligen Kühlschlauch 12 vorhanden. Durch den direkten Kontakt, die Vielzahl der elektrischen Leiter 16, z.B. Kupferleiter, am jeweiligen Kühlschlauch 12 und die Form der elektrischen Leiter 16 ist eine bestmögliche oder maximale Wärmeübertragung gegeben.

Mit dem beschriebenen Ladekabel 100 gemäß dem Ausführungsbeispiel aus Figur 3 wird ein verbessertes Kabel für das Laden von Elektrofahrzeugen bereitgestellt. Bei der Ausgestaltung aus Figur 1 können beispielsweise Berührungspunkte oder kurze Anlageflächen AFR zwischen Isolierhülle des Kühlschlauchs 1200 und den elektrischen Leitern 1600 vorliegen. Mit den Ausführungsbeispielen gemäß Figuren 2 und 3 stehen die elektrische Leiter 16 flächiger (über die Anlagefläche AFT) in Kontakt mit dem Kühlschlauch 12 und indirekt mit dem Kühlmedium 14. Das heißt, ein Vorteil der Ausführungsbeispiele aus den Figuren 2 und 3 ist die gegenüber dem Stand der Technik aus Figur 1 bessere Wärmeübertragung.

Mittels der gekühlten Leitung 10 aus Figur 2 und des gekühlten Ladekabels 100 aus Figur 3 ist es somit möglich, trotz kleineren Querschnitten eine hohe Leistung, beispielsweise von der Ladestation ins Fahrzeug (und damit an die Batterie) oder in dem Fahrzeug, zu übertragen. Normalerweise würden die kleineren Querschnitte nicht diese Leistung übertragen können, weil sie sich durch die Strombelastung zu schnell erwärmen würden. Dies würde zu einer Überschreitung der maximal zulässigen Leitertemperatur nach EN 50620 oder IEC 62893 nach einer bestimmten Zeit führen. Dadurch könnten die Leitungen in ihrer Lebensdauer geschädigt werden.

## Patentansprüche

1. Leitung (10), insbesondere Hochvolt-Leitung für ein Fahrzeug oder Leitung für ein Ladekabel (100) beispielsweise für Elektrofahrzeuge, wobei die Leitung (10) aufweist:
- einen Kühlschlauch (12), in dem ein Kühlmedium (14) führbar ist; und
- mehrere elektrische Leiter (16), wobei die mehreren elektrischen Leiter (16) in Umfangsrichtung des Kühlschlauchs (12) um den Kühlschlauch (12) herum angeordnet sind und jeweils eine Querschnittsform aufweisen, die von einer runden, insbesondere einer kreisrunden, Form abweicht.

2. Leitung (10) nach Anspruch 1, wobei die mehreren elektrischen Leiter (16) als mehrere, nicht voneinander isolierte elektrische Leiter (16) ausgebildet sind.

3. Leitung (10) nach Anspruch 1 oder 2, wobei die mehreren elektrischen Leiter (16) in direktem Kontakt mit dem Kühlschlauch (12) stehen.

4. Leitung (10) nach einem der Ansprüche 1 bis 3, wobei die mehreren elektrischen Leiter (16) miteinander verseilt oder unverseilt um den Kühlschlauch (12) herum angeordnet sind.

5. Leitung (10) nach einem der Ansprüche 1 bis 4, wobei die mehreren elektrischen Leiter (16) jeweils als ein Litzenleiter ausgebildet sind.

6. Leitung (10) nach Anspruch 5, wobei der jeweilige Litzenleiter der mehreren elektrischen Leiter (16) jeweils eine Vielzahl von Einzeldrähten aufweist oder durch eine Vielzahl von Einzeldrähten gebildet ist, wobei die Einzeldrähte unregelmäßig oder ungleichmäßig relativ zueinander angeordnet sind.

7. Leitung (10) nach Anspruch 6, wobei einer oder mehrere der Einzeldrähte zumindest abschnittsweise in den Kühlschlauch (12) eindrücken.

8. Leitung (10) nach einem der Ansprüche 1 bis 7, wobei die Querschnittsform zumindest eines der mehreren elektrischen Leiter (16) jeweils zumindest nahezu trapezförmig ist.

9. Leitung (10) nach einem der Ansprüche 1 bis 8, wobei die mehreren elektrischen Leiter (16) jeweils eine zu dem Kühlschlauch (12) hinweisende Innenfläche (16a) aufweisen, wobei die Innenfläche (16a) zumindest eines der mehreren elektrischen Leiter (16) zumindest abschnittsweise im Querschnitt zumindest nahezu konkav oder zumindest nahezu eben ausgebildet ist.

10. Leitung (10) nach einem der Ansprüche 1 bis 9, wobei die mehreren elektrischen Leiter (16) jeweils eine von dem Kühlschlauch (12) wegweisende Außenfläche (16b) aufweisen, wobei die Außenfläche (16b) zumindest eines der mehreren elektrischen Leiter (16) zumindest abschnittsweise im Querschnitt zumindest nahezu konvex oder zumindest nahezu eben ausgebildet ist.

11. Leitung (10) nach einem der Ansprüche 1 bis 10, wobei die Leitung (10) ferner eine Isolation (18) aufweist, wobei die Isolation (18) den Kühlschlauch (12) und die mehreren elektrischen Leiter (16) umgibt.

12. Ladekabel (100), beispielsweise für Elektrofahrzeuge, wobei das Ladekabel (100) zumindest eine erste Leitung (10) nach einem der Ansprüche 1 bis 11 und zumindest eine zweite Leitung (10) nach einem der Ansprüche 1 bis 11 aufweist.

13. Ladekabel (100) nach Anspruch 12, wobei der Kühlschlauch (12) der zumindest einen ersten Leitung (10) als ein Vorlauf und der Kühlschlauch (12) der zumindest einen zweiten Leitung (10) als ein Rücklauf für das Kühlmedium (14) ausgebildet ist oder wobei alternativ der Kühlschlauch (12) der zumindest einen ersten Leitung (10) als ein Rücklauf und der Kühlschlauch (12) der zumindest einen zweiten Leitung (10) als ein Vorlauf für das Kühlmedium (14) ausgebildet ist.

14. Ladekabel (100) nach Anspruch 12 oder 13, wobei die mehreren elektrischen Leiter (16) der zumindest einen ersten Leitung (10) eine positive Gleichstromader bilden und die mehreren elektrischen Leiter (16) der zumindest einen zweiten Leitung (10) eine negative Gleichstromader bilden.

15. Ladekabel (100) nach einem der Ansprüche 12 bis 14, wobei zwei erste Leitungen (10) und zwei zweite Leitungen (10) vorgesehen sind, und wobei die mehreren elektrischen Leiter (16) der ersten Leitungen (10) eine gemeinsame positive Gleichstromader bilden und die mehreren elektrischen Leiter (16) der zweiten Leitungen (10) eine gemeinsame negative Gleichstromader bilden.

## Geänderte Patentansprüche

### Geänderte Patentansprüche gemäss Regel 137(2) EPÜ.

1. Leitung (10), insbesondere Hochvolt-Leitung für ein Fahrzeug oder Leitung für ein Ladekabel (100) beispielsweise für Elektrofahrzeuge, wobei die Leitung (10) aufweist:
- einen Kühlschlauch (12), in dem ein Kühlmedium (14) führbar ist; und
- mehrere elektrische Leiter (16), wobei die mehreren elektrischen Leiter (16) in Umfangsrichtung des Kühlschlauchs (12) um den Kühlschlauch (12) herum angeordnet sind und jeweils eine Querschnittsform aufweisen, die von einer runden, insbesondere einer kreisrunden, Form abweicht, **dadurch gekennzeichnet, dass** die mehreren elektrischen Leiter (16) als mehrere, nicht voneinander isolierte elektrische Leiter (16) ausgebildet sind.

2. Leitung (10) nach Anspruch 1, wobei die mehreren elektrischen Leiter (16) in direktem Kontakt mit dem Kühlschlauch (12) stehen.

3. Leitung (10) nach Anspruch 1 oder 2, wobei die mehreren elektrischen Leiter (16) miteinander verseilt oder unverseilt um den Kühlschlauch (12) herum angeordnet sind.

4. Leitung (10) nach einem der Ansprüche 1 bis 3, wobei die mehreren elektrischen Leiter (16) jeweils als ein Litzenleiter ausgebildet sind.

5. Leitung (10) nach Anspruch 4, wobei der jeweilige Litzenleiter der mehreren elektrischen Leiter (16) jeweils eine Vielzahl von Einzeldrähten aufweist oder durch eine Vielzahl von Einzeldrähten gebildet ist, wobei die Einzeldrähte unregelmäßig oder ungleichmäßig relativ zueinander angeordnet sind.

6. Leitung (10) nach Anspruch 5, wobei einer oder mehrere der Einzeldrähte zumindest abschnittsweise in den Kühlschlauch (12) eindrücken.

7. Leitung (10) nach einem der Ansprüche 1 bis 6, wobei die Querschnittsform zumindest eines der mehreren elektrischen Leiter (16) jeweils zumindest nahezu trapezförmig ist.

8. Leitung (10) nach einem der Ansprüche 1 bis 7, wobei die mehreren elektrischen Leiter (16) jeweils eine zu dem Kühlschlauch (12) hinweisende Innenfläche (16a) aufweisen, wobei die Innenfläche (16a) zumindest eines der mehreren elektrischen Leiter (16) zumindest abschnittsweise im Querschnitt zumindest nahezu konkav oder zumindest nahezu eben ausgebildet ist.

9. Leitung (10) nach einem der Ansprüche 1 bis 8, wobei die mehreren elektrischen Leiter (16) jeweils eine von dem Kühlschlauch (12) wegweisende Außenfläche (16b) aufweisen, wobei die Außenfläche (16b) zumindest eines der mehreren elektrischen Leiter (16) zumindest abschnittsweise im Querschnitt zumindest nahezu konvex oder zumindest nahezu eben ausgebildet ist.

10. Leitung (10) nach einem der Ansprüche 1 bis 9, wobei die Leitung (10) ferner eine Isolation (18) aufweist, wobei die Isolation (18) den Kühlschlauch (12) und die mehreren elektrischen Leiter (16) umgibt.

11. Ladekabel (100), beispielsweise für Elektrofahrzeuge, wobei das Ladekabel (100) zumindest eine erste Leitung (10) nach einem der Ansprüche 1 bis 10 und zumindest eine zweite Leitung (10) nach einem der Ansprüche 1 bis 10 aufweist.

12. Ladekabel (100) nach Anspruch 11, wobei der Kühlschlauch (12) der zumindest einen ersten Leitung (10) als ein Vorlauf und der Kühlschlauch (12) der zumindest einen zweiten Leitung (10) als ein Rücklauf für das Kühlmedium (14) ausgebildet ist oder wobei alternativ der Kühlschlauch (12) der zumindest einen ersten Leitung (10) als ein Rücklauf und der Kühlschlauch (12) der zumindest einen zweiten Leitung (10) als ein Vorlauf für das Kühlmedium (14) ausgebildet ist.

13. Ladekabel (100) nach Anspruch 11 oder 12, wobei die mehreren elektrischen Leiter (16) der zumindest einen ersten Leitung (10) eine positive Gleichstromader bilden und die mehreren elektrischen Leiter (16) der zumindest einen zweiten Leitung (10) eine negative Gleichstromader bilden.

14. Ladekabel (100) nach einem der Ansprüche 11 bis 13, wobei zwei erste Leitungen (10) und zwei zweite Leitungen (10) vorgesehen sind, und wobei die mehreren elektrischen Leiter (16) der ersten Leitungen (10) eine gemeinsame positive Gleichstromader bilden und die mehreren elektrischen Leiter (16) der zweiten Leitungen (10) eine gemeinsame negative Gleichstromader bilden.
